# EUROPEAN PATENT SPECIFICATION

(11) **EP 0 724 969 B1**
(45) Date of publication and mention of the grant of the patent: **15.09.1999**
(21) Application number: 96101668.0
(22) Date of filing: 06.02.1996
(51) Int. Cl.: B41N 1/12, B29C 44/56

(54) **Method of making an ink pad with different pore sizes for improved ink metering**
Verfahren zur Herstellung von einer Stempelvorrichtung mit unterschiedlicher Porendimensionen für bessere Farbendosierung
Méthode de fabrication de coussins d'encre avec des dimensions de pores non-uniformes pour un meilleur dosage de l'encre

(30) Priority: 06.02.1995 US 384063
(43) Date of publication of application: 07.08.1996
(73) Proprietor: PITNEY BOWES INC., Stamford Connecticut 06926-0700 (US)
(72) Inventor: Sarada, Thyagaraj, Norwalk, CT 06851 (US); Bernard, Richard A., Norwalk, CT 06850 (US); Bonaccorso, Jr., William H., Emmaus, Pennsylvania 18049 (US)
(74) Representative: Avery, Stephen John

(56) References cited:
- EP-A- 0 575 771
- US-A- 5 006 404
- US-A- 5 104 908
- US-A- 5 132 170
- US-A- 5 213 751
- US-A- 5 221 508
- PATENT ABSTRACTS OF JAPAN vol. 016, no. 477 (M-1320), 5 October 1992 & JP 04 173343 A (RICOH CO LTD), 22 June 1992,

## Description

The invention relates generally to porous members, and is applicable to such members for dispensing liquid, and to ink dispensing systems, ink dispensing materials and printing elements.

US-A-5 213 751 and EP-A-0 575 771 describe a method for making a porous member from a foam, said method comprising placing a sheet of foam in a press between two members, producing a gradient temperature in said foam and applying pressure to the foam via said members.

In US-A-5 213 751 only one of the members is heated and a shim having a thickness smaller than the thickness of the sheet of the foam is used between the members.

In EP-A-0 575 771, the foam may be open cell polyurethane which is heated by one of the members to a temperature between 200°C and 250°C.

In the printing operation of the impact type, a drum / plate is provided with ink, by an ink roller or ink pad, immediately before making contact with a medium such as paper. The inking member can be one of two types, one wherein ink is supplied continually to the inking member and the other where the inking member stores a quantity of ink and is replaced when that quantity of ink has been consumed. In a system where ink is continually supplied, a method of replenishing the ink must be provided. The method, for example may be a pump attached to a reservoir for a flat bed ink pad printing system. With regard to a self contained inking member, the advantages reside in not requiring a mechanism for supplying ink to the inking member, but the disadvantage is that the inking member must be replaced from time to time on a much more frequent basis. There is also a tendency for the print intensity to vary from dark to light as the ink in the roller or pad is slowly depleting. The instant invention is directed to an inking member that is capable of storing a relatively large quantity of ink, yet is able to meter the ink efficiently. Although the ink member has primary advantages as a self contained inking layer, the ink member can be used either as the print plate (element) for transferring print characters (fonts or patterns) or as an ink transferring medium to supply ink to a dedicated (separate) print plate.

One of the methods used by the prior art to manufacture printing elements and ink transfer members or metering materials is to manufacture the foregoing from porous polymeric materials prepared specifically for a given application. One such method is to mix a filler (also known as a pore forming material) with a polymer, and to remove the filler by a leaching process after completing a series of steps to make the product. If the filler is a water soluble salt, the filler is leached away with water, otherwise the filler is leached with a suitable organic solvent. The foregoing allows pores to be formed in the metering material. The size and shape of the pores are controlled by the screened size (mesh size) and shape of the filler. The polymer and the filler are intimately mixed first with or without external heating, and then subjected to compression molding or extrusion, to get to the near net shape of form before the filler is leached to remove the filler and create the pores. During the molding or extrusion step or in a separate step the porous material thus formed is further processed to form ink metering pads, rollers or actual printing elements. The foregoing porous material provides void volumes for holding inks.

One of the disadvantages of the foregoing is that the filler must be carefully controlled to maintain the pore size distribution.

Another disadvantage of the foregoing is that the ratio of polymer to filler must be carefully controlled. If the ratio of polymer to filler is high, the filler may become encapsulated and can not be washed out. Also, if the ratio of polymer to filler is high, even if the filler is leached out, the resulting material will have closed cell pores in which fluids can not flow through. If the ratio of polymer to filler is low, then the metering material may not be moldable or extrudable. Also the final dimensions and mechanical properties are critically dependent on the initial polymer - filler ratios. Certain fillers like sodium nitrate may also be a fire hazard, either during sizing or incorporation during fabrication that generate or involve high temperatures. Also special precautions are needed in such mixing, since the fillers consist of very fine particles (static charge build up).

An additional disadvantage of the foregoing is that the prior art leaching process generates waste fluids which must be properly disposed resulting in an increase in the cost of the process.

Another method used by the prior art to manufacture printing elements and ink members or metering materials is a process that involves the mixing of liquid plasticizers, polyvinyl chloride and ink disclosed in U.S. Patent No. 3,971,315 entitled "Macroporous Micoporous Marking Structure" by Frederick C. Hansen. The process alleges to assist pore size distribution of wider ranges, but still has all the disadvantages associated with the generic polymer - filler processes. In addition the material has multiple layers and each layer has to be processed separately before combining the layers and hence the entire fabrication tends to be labor intensive.

A further disadvantage of the above process is that a skin is likely to form on the surface of the material during the processing. The skin prevents the controlled flow of ink from the interior of the material to the outer surface of the material. Thus, an additional grinding step may be required to open the pores on the skin surface.

Another method used by the prior art to manufacture printing elements and ink members or metering materials is a process that utilizes physical or chemical blowing agents. Physical blowing, for example involves the supplying of air or a gas into liquid monomers before polymerization and curing. One of the problems encountered with physical blowing is controlling the size, shape and interconnection of pores. Hence, control of the optimum physical properties is difficult.

A disadvantage of the foregoing is that there is a large variation in properties of the material within a batch and from batch to batch.

Chemical blowing agents like 2, 2' - Azobis (isobutyronitrile) or ADN would achieve the same result as physical blowing. The disadvantages of chemical blowing agents (CBA) are their high cost and in some cases their toxicity. CBA may also decrease the thermal stability of the polymer by leaving embedded thermal decomposition products.

Another commonly used practice is to make composite materials consisting of different layers of the same or different polymeric materials of different pore size distributions together by joining them with adhesives or other means. The disadvantages of such procedures is that selection of mutually compatible materials is difficult. The use of an adhesive adds problems of proper bonding without blocking the pores, thus reducing the flow properties. The adhesives may have a tendency to separate during use due to the ink solvents.

According to a first aspect of the invention, there is provided a porous member, comprising: a body composed of an open cell porous thermoset or thermoplastic material having a density gradient of pore sizes, said porous material having a first layer with a thickness between about 0.4 mm and about 1.4 mm and having generally small pore sizes from about 10 µm to about 80 µm; a second layer adjacent said first layer with a thickness between about 1 mm and about 1.3 mm and having generally medium pore sizes between about 40 µm and about 150 µm; and a third layer adjacent said second layer with a thickness between about 2.5 mm and about 3.0 mm and having generally large size pores between about 100 µm and about 300 µm.

According to a second aspect of the invention, there is provided an ink dispensing system comprising a porous member of the present invention.

According to a third aspect of the invention, there is provided a printing device incorporating a porous member of the present invention.

According to a fourth aspect of the invention, there is provided a postage meter or franking machine incorporating a printing device of the present invention.

For a better understanding of the invention and to show how the same may be carried into effect, reference will now be made, by way of example, to the accompanying drawings, in which:
Fig. 1 is a drawing of a cross sectional view of the foraminous material before differential felting;
Fig. 2 is a drawing of a cross section view of the material of Fig. 1 after differential felting; and
Fig 3 is a schematic drawing of the press used for differential felting.

The following describes a method of manufacturing a fluid dispensing member involving a secondary process that forms a differentially felted foam from off-the-shelf open cell thermoset or thermoplastic polymers. A material or print element, thus formed distributes inks and other fluids uniformly, while acting as an effective reservoir with a capacity to deliver ink only on demand. The above felting process produces a density gradient of pore size in the thickness direction within the material to aid in such improved metering of inks and other fluids. In other words, the top surface of the metering material may have pores that are generally small in size, the middle layer of the metering material may have pores that are generally of medium size, and the lower layer of the metering material may have pores that are generally large in size. The process also does not close the pores on the top surface. Thus, a skin is not formed which subsequently has to be removed. The material may also be used as printing elements, with the characters or patterns molded on the top surface (finer pore surface) that can be accomplished during the felting process. The print patterns can also be generated in a subsequent etching or molding step.

The process that forms the differentially felted foam involves the directionally controlled application of pressure and heat to the off-the-shelf open cell foam polymers. The above process causes a permanent graded compression set in the foam material. Examples of such thermoset or thermoplastic foraminous or porous open cell foams are polyurethanes, polyolefins, polyethylene, neoprene (chloroprene) and melamine - formaldehyde.

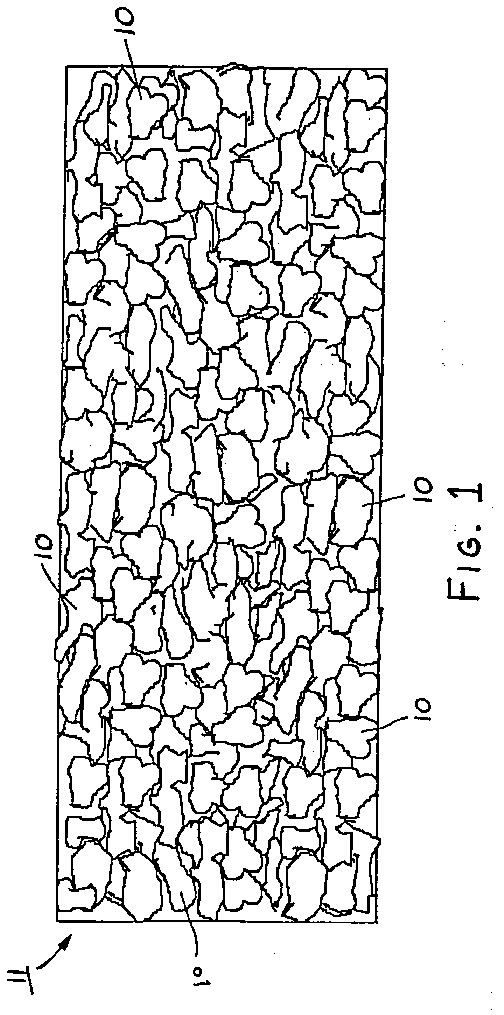

Referring now to the drawings in detail, and more particularly to Fig. 1, the reference character 11 represents a open cell thermoset or thermoplastic foraminous material. Examples of thermoset or thermoplastic foraminous materials are polyurethanes, polyolefins, polyethylene, neoprene (chloroprene) and melamine - formaldehyde. The pores 10 of material 11 have a size of approximately 10 µm to 300 µm. Pores 10 are randomly distributed throughout material 11. Although there is a wide range of pore 10 sizes, material consists mostly of the larger pores, close to the top of the range mentioned here. Pores 10 of size 150µm. and above are, therefore, more prevalent in the off-the-shelf material.

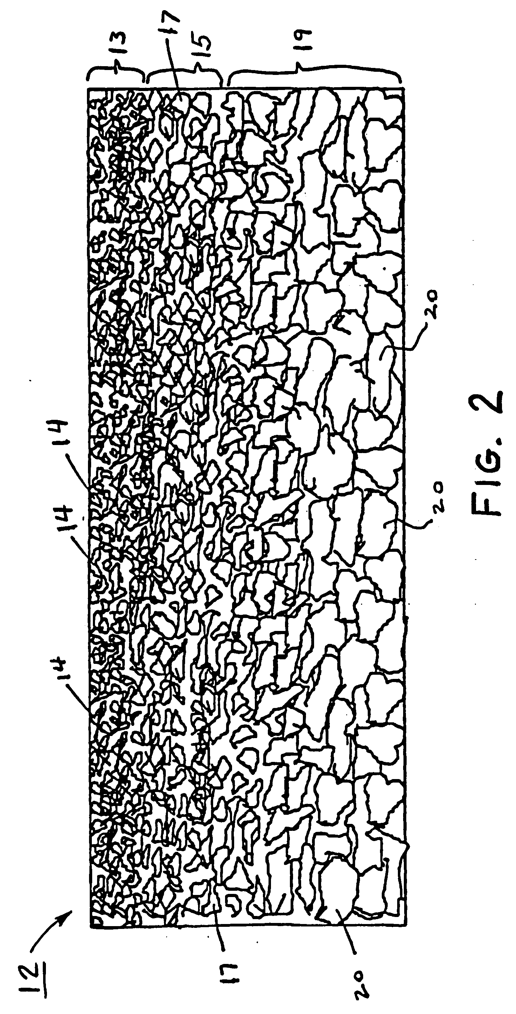

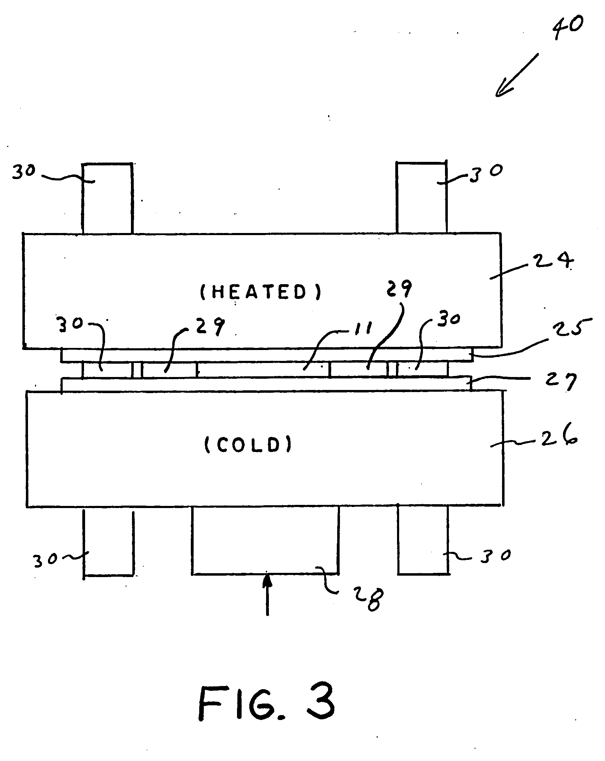

Fig. 2 is a drawing of a cross section view of material 11 of Fig. 1 after differential felting. The process in which differential felting is performed will be hereinafter described in the description of Fig. 3. After material 11 is differentially felted it will be shown as material 12. Material 12 may be used as an ink transfer member or in an ink cartridge in an impact printer or made into a print plate. The inking member is shown generally at 12 in the form of a pad and has a top layer 13 that serves as a metering layer having generally small pores 14 therein. The pores 14 of the top layer 13 can have a size of approximately 10 µm to 80 µm. Confluent with the top layer 13 is a middle layer 15 that generally has medium pores 17. Pores 17 may serve as an ink reservoir and have a size of 40 µm to 150 µm. Confluent with the middle layer 15 is a bottom layer 19 that generally has large pores 20. Pores 20 may serve as an ink reservoir and have a size of 100 µm to 300 µm.

It is to be understood that the change in pore size effected by the process described herein is rather gradual and there is no sharp demarcation between the top layer 13, the middle layer 15 and the bottom layer 19. In other words the pore sizes will overlap and between any two layers mentioned above, there may be zones with pore sizes that fall in-between. The identification of the top layer 13, the middle layer 15 and the bottom layer 19 are only to illustrate the phenomenon.

The top layer 13 is contacted by the print elements of a printhead for the purpose of having the pad 12 supply ink to such fonts. After contact with the print pad 12, the fonts would contact a medium such as paper to transfer ink thereto and complete the printing operation, as is well known in the art. The top layer 13 acts as metering layer and will release ink slowly on demand upon the application of pressure to control the amount of ink supplied to the fonts of a printhead. As ink is transferred from the top (metering) layer 13 to the fonts, replacement ink is supplied from the middle layer 15 to the top layer 13, because of their confluence. The middle layer 15 acts as an ink reservoir and has generally medium pores 17 that are capable of holding quantities of ink. As ink is transferred from the middle layer 15 to the top layer 13 ink is also transferred from the bottom layer 19 to the middle layer 15. The bottom layer 19 acts as the main ink reservoir and has generally larger pores 20 that are capable of holding large quantities of ink. Needless to say, after the ink has been sufficiently depleted in the course of the printing operations, the pad 12 would be replaced with a pad having a full supply of ink if it were not supplied with ink continually.

The monotonic change in pore sizes from bottom layer 19 to middle layer 15 to top layer 13, thus determine the formation of a distinct main storage layer for ink at the bottom layer 19, a transfer layer in the middle layer 15 and a metering layer in the top layer 13.

Fig 3 is a schematic drawing of the press 40 (under a closed state) used for differential felting. Press 40 comprises: a top platen 24 that is coated with a layer of Teflon® 25; a bottom platen 26 that is coated with a layer of Teflon® 27; a ram 28; and shims or molded cavity 29. Top platen 24 and bottom platen 26 may be moved up and down slides 30 so that material 11 may be placed between shims or molded cavity 29 between platens 24 and 26. The differential felting process is accomplished by heating the top material 11 thereto. Fig. 1 is a drawing of a cross section of the foraminous material 11 before the differential felting process and Fig. 2 is a drawing of the foraminous material 11 after the differential felting process, when material 11 becomes material 12.

Material 11 can be any suitable foraminous material such as polyurethane, polyethylene, other polyolefins, polychloroprene, melamine - formaldehyde and the like. The important consideration is that the foraminous material be an open cell foam and that it be compatible with the ink that is to be dispensed. It should also have all the other mechanical properties (like tensile and flex moduli, compressibility, hardness, density, curl, indentation force, etc.) Fluid flow properties are also very essential. One preferred material is polyurethane, for the class of inks that are described in U.S. Patent Nos 5,114,478 and 5,091,006 incorporated herein by reference.

The following example describes the differential felting process for the material 11, when the material 11 is a polyurethane foam.

The method of controlling the density of the top layer 13 (Fig. 2) is by creating a compression set of a fixed thickness of material 11, while maintaining interconnectively of the pores. A material 11 having a length of 130 mm and a width of 38.6 mm and a thickness of approximately 6.2 mm was placed on top of the bottom platen 26 of a press 40 and between two shims or molded cavity 29. The top platen 24 of the press 40 was heated to a temperature of 380 to 450°F (about 193 to 233°C) and a load of approximately 8,000 to 9,000 kg of force on 165 mm ram press 28 was applied to the bottom platen 26 for 2.5 to 3.5 minutes. It should be noted that the load is not critical as it is only necessary that the top platen 24 engage the shims or molded cavity 29. The height of the shim or the molded cavity 29 determines the final thickness of material 11. Typically the molded cavity or shim 29 will have a thickness between 4.4 to 4.8 mm which is less than the original thickness of material 11. This yielded a top layer 13 (Fig. 2) with a thickness in the range of 0.4 mm to 1.4 mm. Preferably, the top layer 13 thickness will close to 0.762 mm. The middle layer 15 is also formed during the above process and it has a thickness of 1 mm to 1.3 mm and the thickness of the bottom layer 19 will be 2.5 mm to 3.0 mm. The variables like pressure, temperature and time of the "felting" process are optimized for each end use that takes into consideration the ink solvents, solid contents, viscosity, surface tension and amount of ink transferred during each print cycle etc. The selection of the polymeric material is critically important since polymeric swell is strongly dependent on the nature of the solvent.

In a preferred embodiment, any suitable mold release agent can be used, i.e. a polytetrafluoroethylene coated plate having a thickness of approximately 6.0 mm was placed between the top platen 24 and the material 11. Clearly, in place of layers 25 and 27, the contacting surface of platens 24 and 26 could be coated with polytetrafluoroethylene, or any suitable mold release agent.

The foraminous material described herein is a special class of polyurethane because of its versatility and compatibility with the ink for the intended application. The physical properties like compression strength, firmness, conformance, compliance, tear, elongation, tensile and flexural moduli, etc. of this class of urethanes are ideally suited for the said application. The material has good wear strength and the required swell characteristics for the class of inks in question These factors control the ink hold out, flow and pay out and is also a critical requirement, for the long term mechanical and chemical stability of the material.

More important is the fact that the excess ink left behind after the print cycle is re-absorbed rapidly into the lower layers of pad, and hence there is no pooling of ink on the top surface. In addition, minimum gaseous products are generated during the felting process. Ink does not tend to run out of the pad during shipping, handling and storing. At ambient temperatures the inked pads have good dimensional stability and do not undergo chemical decomposition over a period of time after impregnation with said inks.

The properties of the urethane selected for the above example are as follows.

Foam material SIF (Standard Industrial Foam) Felt (8-900Z) is the raw material for this ink pad application. The foam is polyurethane-polyester reticulated (open pore) prefelted (permanently compressed) foam from Foamex Inc. of 3005 Commercial Road, Fort Wayne, IN 46809. The number 900 indicates that the foam has 90 pores per linear inch before felting. The number 8 signifies that the prefelted foam is compressed 8:1 of the original thickness. This is also called firmness of the material. The "Z" represents a zapping process to insure reticulation, or obtain confluent pores.

### Physical Properties of Foamex SIF felt (8-900Z) foam

| | |
|---|---|
| Grade: | 900 |
| Firmness: | 8 |
| Color: | Natural (Beige), no artificial coloring. |
| Density: | 14 to 18 lb./cu. ft (about 224 to 289 kg/m³) ASTM D3574 |
| Elongation: | 425% ASTM D3574 |
| Air Permeability: (Digital Air Flow Meter) | 70 to 120 ml/min |

The properties of the differentially felted product in the above example are as follows:

| **Property** | **Specification** |
|---|---|
| Pad curl | 0.5 inch max. (about 1.25cm) |
| Indentation Force Deflection (25%) | 3 to 4 lb. (about 1.36 to 1.81 kg) |
| Air Permeability Top Surface (Digital Air Flow Meter) Bottom Surface | 13 to 30 ml/min. |
| (Digital Air Flow Meter) | 70 to 120 ml/min |
| Weight of The Dry Pad | 6.3 to 7.6 grams |

The following example describes the differential felting process for the material 11, when the material 11 is Willtec®.

The method of controlling the density of the top layer 13 (Fig. 2) is by creating a compression set of a fixed thickness of material 11, while maintaining interconnectively of the pores. A material 11 having a length of 130 mm and a width of 38.6 mm and a thickness of approximately 5.1 mm was placed on bottom platen 26 of a press 40 and between two shims or molded cavity 29. The top platen 24 of the press 40 was heated to a temperature of 550 to 600°F (about 287 to 316°C) and a load of approximately 600 to 1000 kg of force on 165 mm ram press 28 was applied to the bottom platen 26 for 7.0 to 10.0 minutes. It should be noted that the load is not critical as it is only necessary that the top platen 24 engage the shims or molded cavity 29. The height of the shim or molded cavity 29 determines the final thickness of material 11. Typical shim 29 will have a thickness between 4.4 to 4.8 mm less than the original thickness of material 11. This yielded a top layer 13 (Fig. 2) with a thickness in the range of 0.4 mm to 1.4 mm. Preferably the thickness is close to 0.762 mm. The middle layer 15 is also formed during the above process and it has a thickness of 1 mm to 1.3 mm and the thickness of the bottom layer 19 will be 2.5 mm to 3.0 mm. The variables like pressure, temperature and time of the "felting" process are optimized for each end use that takes into consideration the ink solvents, solid contents, viscosity, surface tension and amount of ink transferred during each print cycle etc. The selection of the polymeric material is critically important since polymeric swell is strongly dependent on the nature of the solvent.

In a preferred embodiment, any suitable mold release agent can be used, i.e. a polytetrafluoroethylene coated plate having a thickness of approximately 6.0 mm was placed between the top platen 24 and the material 11. Clearly, in place of layers 25 and 27, the contacting surface of platens 24 and 26 could be coated with polytetrafluoroethylene, or any suitable mold release agent.

The foraminous material described herein is a special class of melamine-formaldehyde because of its versatility and compatibility with the ink for the intended application. The physical properties like compression strength, firmness, conformance, compliance, tear, elongation, tensile and flexural moduli, etc. of this class of melamine-formaldehyde is ideally suited for the said application. The material has good wear strength and the required swell characteristics for the class of inks in question. This factor controls the ink hold out, flow and pay off and is also a critical requirement, or the long term mechanical and chemical stability of the material.

More important is the fact that the excess ink left behind after the print cycle is reabsorbed rapidly into the lower layers of pad, and hence there is no pooling of ink on the top surface. In addition, minimum gaseous products are generated during the felting process. Ink does not tend to run out of the pad during shipping, handling and storing. At ambient temperatures the inked pads have good dimensional stability and do not undergo chemical decomposition over a period of time after impregnation with said inks.

Willtec® is a melamine based polymer, extremely low density, flexible open cell foam. It has very good chemical resistance properties. The table below provides some of the physical properties.

| **Grade:** | **Off the Shelf** |
|---|---|
| Firmness: | Non Felted |
| Color: | White |
| Density: | 0.5 to 0.7 lb./cu. ft. (about 8 to 11.2 kg/m³) |
| Elongation: | 8% |
| Air Permeability | 600 to 700 ml/min. (digital Air Flow Meter) |
| Pore size: | 175 to 300 µm |

This low density Willtec is taken through a prefelting step to compress the material. The properties of the prefelted material are as follows:

| **Property** | **Specification** |
|---|---|
| Grade: | Differentially Felted Pad |
| Firmness | 2.5 |

The prefelted 2.5 firmness material is then taken through the differential felting process. The properties of the differentially felted material in the above example are as follows.

| | |
|---|---|
| Pad Curl: | 0.5 inch Max. (about 1.25cm) |
| Weight of Density Dry Pad | 0.7 to 0.8 grams |
| Air Permeability: | Top 500 to 550 ml/min. |
| | Bottom 550 to 600 ml/min. |

### Property Specifications

| Pore Size: | |
|---|---|
| Top | 40 to 80 µm |
| Transition | 80 to 150 µm |
| Bottom | 150 to 200 µm |

If other open cell foams are chosen, felting temperature, pressure and dwell time will be selected to give the optimum properties for the final product. If for e.g., Neoprene (chloroprene) is used as the starting material 11, then the temperature of the top plate 24 is maintained between 480-500° F., (about 250 to 260°C), and a pressure of 10,000 to 12,000 kg. used. A dwell time of 3 to 4 minutes is necessary.

Although the invention is described as applied to an inking pad, it could be utilized equally well with other forms of inking members such as inking rollers, ink cartridges as well as print plates. It could also be used to wick ink more rapidly in an ink cartridge.

The advantages of the instant printing pad and method of making is that of simplicity in manufacture and versatility of the material that results in improved quality in an inking member at a much lower cost. No special occupational safety procedures other than standard safe manufacturing practices are required. Furthermore, no effluent streams of ligands or gases are involved. When used as a self contained inking member it had a life of 10,000 printing cycles. The fact that only one elastomeric foam material is used to form the graded density pad is advantageous since quality control can be more easily achieved. Furthermore, one need not be concerned with adhesive losing its properties with the passage of time as could occur with prior dual or multiple density inking members joined mechanically or by adhesives.

The above embodiments have been given by way of illustration only, and other embodiments of the instant invention will be apparent to those skilled in the art from consideration of the detailed description. Accordingly, limitations on the instant invention are to be found only in the claims.

## Claims

1. A porous member, comprising:
a body composed of an open cell porous thermoset or thermoplastic material having a density gradient of pore sizes, said porous material having a first layer with a thickness between about 0.4 mm and about 1.4 mm and having generally small pore sizes from about 10 µm to about 80 µm; a second layer adjacent said first layer with a thickness between about 1 mm and about 1.3 mm and having generally medium pore sizes between about 40 µm and about 150 µm; and a third layer adjacent said second layer with a thickness between about 2.5 mm and about 3.0 mm and having generally large pore sizes between about 100 µm and about 300 µm.

2. A member according to Claim 1, wherein the porous material is a polyurethane, polyolefin, neoprene or melamine-formaldehyde.

3. A member according to Claims 1 or 2, which contains liquid in the pores thereof.

4. A member according to Claim 3, wherein the liquid is ink.

5. A member as claimed in any one of the preceding claims, which is in the form of a pad or a printing plate.

6. An ink dispensing system incorporating a porous member as defined in any one of Claims 1 to 5.

7. A printing device incorporating a porous member as defined in any one of Claims 1 to 5.

8. A postage meter or franking machine incorporating a printing device as defined in Claim 7.

## Patentansprüche

1. Ein poröses Element, umfassend:
einen Körper, der aus einem thermohärtbaren oder thermoplastischen porösen Material mit offenen Zellen mit einem Dichtegradienten von Porengrößen besteht, wobei das poröse Material eine erste Schicht mit einer Dicke zwischen ungefähr 0,4 mm und ungefähr 1,4 mm und mit allgemein kleinen Porengrößen von ungefähr 10 µm bis ungefähr 80 µm; eine zweite Schicht, die an die erste Schicht angrenzt, mit einer Dicke zwischen ungefähr 1 mm und ungefähr 1,3 mm und mit allgemein mittleren Porengrößen zwischen ungefähr 40 µm und ungefähr 150 µm; und eine dritte Schicht, die an die zweite Schicht angrenzt, mit einer Dicke zwischen ungefähr 2,5 mm und ungefähr 3,0 mm und mit allgemein großen Porengrößen zwischen ungefähr 100 µm und ungefähr 300 µm aufweist.

2. Element nach Anspruch 1, dadurch gekennzeichnet, daß das poröse Material ein Polyurethan, Polyolefin, Neoprene oder Melamin-Formaldehyd ist.

3. Element nach Anspruch 1 oder 2, welches eine Flüssigkeit in den Poren davon enthält.

4. Element nach Anspruch 3, dadurch gekennzeichnet, daß die Flüssigkeit Farbe ist.

5. Element nach einem der vorangehenden Ansprüche, das in der Form eines Kissens oder einer Druckplatte ist.

6. Farbausgabesystem, in das ein poröses Element nach einem der Ansprüche 1 bis 5 eingebaut ist.

7. Druckeinrichtung, in die ein poröses Element nach einem der Ansprüche 1 bis 5 eingebaut ist.

8. Postbearbeitungsmaschine oder Frankiermaschine, in die eine Druckeinrichtung nach Anspruch 7 eingebaut ist.

## Revendications

1. Membre poreux comportant :
un corps composé d'une matière poreuse, à cellules ouvertes, thermodurcie ou thermoplastique, ayant un gradient de densité pour les dimensions des pores, ladite matière poreuse ayant une première couche avec une épaisseur entre environ 0,4 mm et environ 1,4 mm et ayant en général des dimensions de pores petites d'environ 10 µm à environ 80 µm, une deuxième couche adjacente à ladite première couche avec une épaisseur entre environ 1 mm et environ 1,3 mm qui a en général des dimensions moyennes de pores entre environ 40 µm et environ 150 µm, et une troisième couche adjacente à ladite deuxième couche avec une épaisseur entre environ 2,5 mm et environ 3,0 mm qui a en général des dimensions de pores grandes entre environ 100 µm et environ 300 µm.

2. Membre selon la revendication 1, où la matière poreuse est un polyuréthanne, une polyoléfine, du néoprène ou du mélamine-formaldéhyde.

3. Membre selon les revendications 1 ou 2, qui contient du liquide dans ses pores.

4. Membre selon la revendication 3, où le liquide est de l'encre.

5. Membre tel que revendiqué dans l'une quelconque des revendications précédentes, qui est sous la forme d'un coussin ou d'une plaque d'impression.

6. Système de distribution d'encre incorporant un membre poreux comme défini dans l'une quelconque des revendications 1 à 5.

7. Dispositif d'impression incorporant un membre poreux tel que défini dans l'une quelconque des revendications 1 à 5.

8. Compteur d'affranchissement ou machine de franchise incorporant un dispositif d'impression tel que défini à la revendication 7.
